# EUROPÄISCHE PATENTSCHRIFT

(11) **EP 3 293 654 B1**
(45) Veröffentlichungstag und Bekanntmachung des Hinweises auf die Patenterteilung: **03.11.2021**
(21) Anmeldenummer: 16187733.7
(22) Anmeldetag: 08.09.2016
(51) Int. Cl.: G06F 21/12, G06F 21/36, H04L 29/06, G06Q 20/42, G06Q 20/38, G06Q 20/32, G06Q 20/12, G06F 16/955, G06F 21/44, G06F 21/62

(54) **VERFAHREN ZUR INTERAKTION ZWISCHEN EINEM DATENVERARBEITUNGSGERÄT UND EINEM MOBILEN GERÄT SOWIE ANORDNUNG ZUR DURCHFÜHRUNG DES VERFAHRENS**
METHOD FOR INTERACTION BETWEEN A DATA PROCESSING DEVICE AND A MOBILE DEVICE AND ASSEMBLY FOR CARRYING OUT THE METHOD
PROCÉDÉ D'INTÉRACTION ENTRE UN APPAREIL DE TRAITEMENT DE DONNÉES ET UN APPAREIL MOBILE ET SYSTÈME D'EXÉCUTION DUDIT PROCÉDÉ

(43) Veröffentlichungstag der Anmeldung: 14.03.2018
(73) Patentinhaber: Schneider Electric Industries SAS, 92500 Rueil-Malmaison (FR)
(72) Erfinder: PATRI, Michael, 63741 Aschaffenburg (DE)
(74) Vertreter: Stoffregen, Hans-Herbert

(56) Entgegenhaltungen:
- WO-A1-2016/125732
- US-A1- 2014 168 716
- US-A1- 2014 310 174
- US-A1- 2014 351 589
- US-A1- 2016 132 891

## Beschreibung

Die Erfindung bezieht sich auf ein Verfahren zur Interaktion zwischen einem Datenverarbeitungsgerät wie Personal Computer und einem mobilen Gerät wie Smartphone zur Aktivierung einer Software-Aktion in dem Datenverarbeitungsgerät nach dem Oberbegriff des Anspruchs 1 sowie auf eine Anordnung zur Durchführung des Verfahrens nach dem Oberbegriff des Anspruchs 6.

Ein Verfahren der eingangs genannten Art ist aus dem Stand der Technik beispielsweise im Zusammenhang mit der Lizenzierung einer Software oder der Durchführung einer Überweisungs-Transaktion bekannt.

Für die Freischaltung einer Software wird eine Anforderungs-Information auf einer Anzeige des Datenverarbeitungsgerätes dargestellt. Nach dem Stand der Technik wird diese mittels eines mobilen Geräts in Form eines Smartphone erfasst und über ein Kommunikationsnetzwerk wie beispielsweise Internet an einen Lizenzierungs-Server gesendet. Von dem Lizenzierungs-Server wird eine Antwort-Information in Form eines Freischaltcodes an das mobile Gerät gesendet und auf einer Anzeige des mobilen Gerätes dargestellt.

Nach dem Stand der Technik wird der Freischaltcode sodann per Hand über eine Tastatur in das Datenverarbeitungsgerät eingegeben, um die Software freizuschalten.

Üblicherweise wird ein Freischaltcode in Form einer alphanummerischen Zeichenfolge dargestellt. Bei der manuellen Eingabe der Zeichenfolge in das Datenverarbeitungsgerät können Fehler auftreten. Aufgrund steigender Sicherheitsanforderungen weisen die Zeichenfolgen immer mehr Zeichen auf, so dass die manuelle Eingabe der Zeichenfolgen mit Zeitaufwand und Fehlerrisiko verbunden ist.

Die US 2016/132891 A1 betrifft verschiedene Ausführungsformen von Systemen und Verfahren zur Selbstzahlung und Überprüfung des Kaufs von Einzelhandelsgütern und Dienstleistungen. Gemäß einer Ausführungsform wird ein Verfahren zum Verifizieren des Kaufs unter Verwendung eines mobilen elektronischen Geräts in drahtloser Kommunikation mit einem Zahlungsüberprüfungssystem und einem Code-Erzeugungssystem bereitgestellt, wobei das Verfahren die folgenden Schritte umfasst: Empfangen von einer Verbraucherinformation, die einen Kaufgegenstand identifiziert, Empfangen von einer Verbraucherinformation, die Zahlungsmittel zum Kauf des Kaufgegenstandes identifiziert; Verarbeiten der Information und Erzeugen eines eindeutigen QR-Codes, der den Kaufgegenstandes angibt sowie senden des eindeutigen QR-Codes an ein mobiles Gerät zur Anzeige durch einen Verbraucher an den Verkäufer des Kaufgegenstandes.

Die WO 2016/125732 A1 betrifft ein optisches Endgerät und ein Scanprogramm mit einfacher Bedienung. Das optische Gerät erfasst ein Gesamtbild eines abzutastenden Bereichs und umfasst: Eine Bilderfassungseinheit, die ein Abbildungselement enthält und die Bereiche in dem abzutastenden Bereich abbildet und Einheitsbilddaten des Bereichs erfasst; eine Positionsinformations-Erfassungseinheit die eine Bildpositionsinformation entsprechend den Einheitsbilddaten erfasst und eine Bildsynthetisierungseinheit, die die Mehrzahl von Einheitsbilddaten synthetisiert, um das Gesamtbild des abzutastenden Bereichs zu erzeugen.

Die US 2014/351589 A1 betrifft Verfahren zum Authentifizieren von Benutzern, die auf Computeranwendungen zugreifen, zum Beispiel Anwendung, die in einer Cloud-Umgebung gehostet werden, auf die mit einer Vielzahl von Computersystemen zugegriffen wird.

Die US 2014/310174 A1 betrifft ein elektronisches Zahlungssystem, wobei elektronische Zahlungen durch Scannen eines 2D-Codes, der sich in der Nähe des Verkaufsortes befindet, mit dem Mobiltelefon des Kunden ausgeführt werden und wobei der Code oder die Daten, die durch den Code verkörpert sind, an ein Zahlungszentrum übermittelt werden, in dem das Konto eines Händlers gutgeschrieben werden kann und das Konto des Kunden ohne Übermittlung von Kontoinformationen belastet wird.

Die US 2014/0168716 A1 betrifft ein Handgerät zur Erfassung von Text sowohl von einem gedruckten Dokument als auch von einem auf einer Anzeige dargestellten Dokument. Das Gerät enthält ein oder mehrere visuelle Sensoren, die visuelle Informationen des gerenderten Textes empfangen.

Davon ausgehend liegt der vorliegenden Erfindung die Aufgabe zugrunde, ein Verfahren sowie eine Anordnung der eingangs genannten Art derart weiterzubilden, dass die Interaktion zwischen dem Datenverarbeitungsgerät und dem mobilen Gerät einerseits vereinfacht und andererseits das Risiko von Eingabefehlern minimiert wird.

Die Aufgabe wird erfindungsgemäß durch ein Verfahren mit den Merkmalen des Anspruchs 1 gelöst.

Die Antwort-Information ist ein Freischaltcode und wird in Form einer codierten Bildinformation in dem mobilen Gerät selbst generiert oder wird durch das mobile Gerät von einem Server wie Lizenzierungsserver aufgerufen und sodann auf der Anzeige des mobilen Geräts angezeigt.

Die auf der Anzeige des mobilen Gerätes dargestellte Antwort-Information wird mittels eines mit dem Datenverarbeitungsgerät gekoppelten optischen Lesegerätes gelesen und zur automatischen Aktivierung der Software-Applikation in das Datenverarbeitungsgerät übertragen.

Der Erfindung liegt die Idee zugrunde, mittels eines optischen Lesegerätes wie CCD-Kamera, eines Laser-Scanners oder einer optischen Maus wie Laser-Maus, mit integriertem Bildsensor die auf der Anzeigeeinheit des mobilen Geräts dargestellte Antwort-Information in Form einer Bildinformation zu lesen. Hierzu wird vorzugsweise die optische Maus über die auf der Anzeige des mobilen Gerätes dargestellte Antwort-Information geführt, um die Antwort-Information zu scannen und in das Datenverarbeitungsgerät zu übertragen.

Die Antwort-Information wird als codierte Bild-Information wie QR-Code oder Strichcode erzeugt, wodurch gegenüber einer herkömmlichen alphanummerischen Zeichenfolge eine erhöhte Codierungsstufe erreicht werden kann.

Des Weiteren bezieht sich die Erfindung auf eine Anordnung zur Durchführung des Verfahrens, umfassend ein Datenverarbeitungsgerät mit einer Anzeigeeinheit und einem optischen Lesegerät, wobei das Datenverarbeitungsgerät ausgebildet ist, eine Anforderungs-Information in Form einer codierten Bild-Information zur Freischaltung einer in dem Datenverarbeitungsgerät installierten Software-Applikation auf der Anzeigeeinheit darzustellen sowie ein mobiles Gerät mit einem optischen Lesegerät, welches ausgebildet ist, die Anforderungs-Information auf der Anzeigeeinheit des Datenverarbeitungsgerätes zu erfassen und eine Antwort-Information in Form eines Freischaltcodes zur Freischaltung der Software-Applikation zu erzeugen oder von einem Server über eine Datenverbindung abzurufen und anzuzeigen. Die Anordnung zeichnet sich gegenüber dem Stand der Technik dadurch aus, dass der Freischaltcode in Form einer codierten Bild-Information auf der Anzeigeeinheit des mobilen Gerätes dargestellt ist und dass das Datenverarbeitungsgerät ausgebildet ist, die auf der Anzeigeeinheit des mobilen Gerätes dargestellte codierte Bildinformation mittels des optischen Lesegerätes optisch zu erfassen und die codierte Bildinformation zu verwenden, um automatisch die Software-Applikation freizuschalten.

Vorzugsweise ist das optische Lesegerät als eine CCD-Kamera, ein Laser-Scanner oder eine optische Maus wie Laser-Maus mit integriertem Bildsensor zum Erfassen der Antwort-Information ausgebildet.

Das optische Lesegerät ist über eine Funkverbindung oder eine Kabelverbindung mit dem Datenverarbeitungsgerät gekoppelt und das mobile Gerät ist vorzugsweise mit einem Netzwerk wie Internet gekoppelt, um Zugriff auf einen externen Server zu erhalten. Vorzugsweise ist das optische Lesegerät integraler Bestandteil des Datenverarbeitungsgeräts.

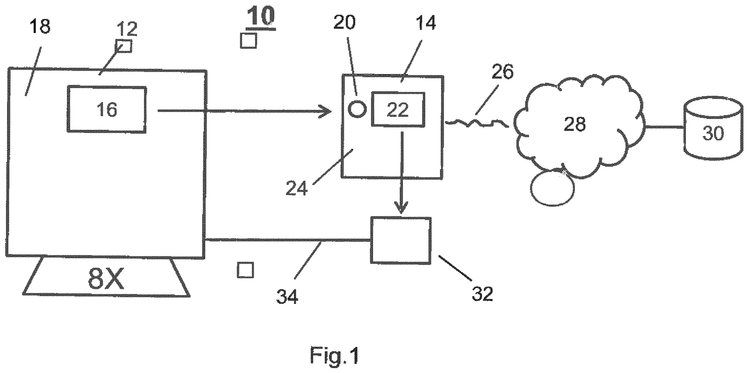

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Die einzige Figur zeigt eine Anordnung 10 zur Interaktion zwischen einem Datenverarbeitungsgerät 12, wie Personal Computer oder Automatisierungsgerät, und einem mobilen Gerät 14, wie Smartphone, zur Aktivierung einer Software-Aktion, z.B. der Freischaltung einer installierten Software-Applikation oder Transaktion einer Überweisung.

Gemäß der Erfindung ist vorgesehen, dass in dem Datenverarbeitungsgerät 12 zur Freischaltung der Aktion zunächst eine Anforderungs-Information 16 auf einer Anzeigeeinheit 18 dargestellt wird. Die Anforderungs-Information 16, z. B. in Form eines QR-Codes, wird mittels eines optischen Sensors 20 des mobilen Geräts 14 eingelesen. Das mobile Gerät 14 kann ausgebildet sein, um auf der Grundlage der eingelesenen Anforderungs-Information 16 selbstständig eine Antwort-Information 22 zu erzeugen, die auf einer Anzeigeeinheit 24 des mobilen Gerätes angezeigt wird.

Alternativ besteht auch die Möglichkeit, dass das mobile Gerät 14 über eine Kommunikationsverbindung 26 sowie ein Netzwerk 28, wie Internet, ein Web-Portal aufruft und die Antwort-Information 22 aus einem Server, wie beispielsweise Lizenzierungsserver 30, abruft und sodann auf der Anzeigeeinheit 24 anzeigt.

Gemäß der Erfindung ist das Datenverarbeitungsgerät 12 derart ausgebildet, um die auf der Anzeigeeinheit 24 des mobilen Geräts 14 dargestellte Antwort-Information 22 automatisch durch ein optisches Lesegerät 32 einzulesen. Die eingelesene Antwort-Information wird in dem Datenverarbeitungsgerät zur Freischaltung der Aktion, im vorliegenden Fall einer Software-Applikation, verwendet.

Das optische Lesegerät 32 ist im dargestellten Ausführungsbeispiel als eine optische Maus ausgebildet, die einen Bildsensor zur Erfassung der Anfrage-Information 22 aufweist. Alternativ kann das optische Lesegerät 32 auch als eine Kamera wie CCD-Kamera oder ein Laser-Scanner ausgebildet sein. Das optische Lesegerät ist im dargestellten Ausführungsbeispiel über eine Kabelverbindung 34 mit dem Datenverarbeitungsgerät verbunden. Alternativ kann das optische Lesegerät 32 auch über eine Funkverbindung mit dem Datenverarbeitungsgerät gekoppelt sein. Ferner besteht die Möglichkeit, dass das optische Lesegerät 32 integraler Bestandteil des Datenverarbeitungsgeräts ist, d. h., eine geräteeigene CCD-Kamera.

Durch das erfindungsgemäße Verfahren bzw. die erfindungsgemäße Anordnung wird gegenüber dem Stand der Technik der Vorteil erreicht, dass eine bidirektionale optische Datenübertragung zwischen dem Datenverarbeitungsgerät und dem mobilen Gerät ermöglicht wird mit der Folge, dass alphanumerische Zeichenfolgen zur Freischaltung, z. B. einer Software oder zur Autorisierung einer Banktransaktion auf einfache Weise und fehlerfrei übertragen werden können. Ein weiterer besonderer Vorteil des Verfahrens ist darin zu sehen, dass das Datenverarbeitungsgerät während der Datenübertragung nicht mit einem Datennetz, wie Internet, verbunden sein muss, so dass das Risiko einer Datenmanipulation und/oder ein ungewolltes "Mitlesen" Dritter reduziert wird.

## Patentansprüche

1. Verfahren zur Interaktion zwischen einem Datenverarbeitungsgerät (12) wie Personal Computer und einem mobilen Gerät (14) wie Smartphone zur Aktivierung einer Software-Aktion in Form einer Freischaltung einer in dem Datenverarbeitungsgerät (12) installierten Software-Applikation, umfassend die Verfahrensschritte:
― Darstellung einer Anforderungs-Information (16) zur Freischaltung der Software-Applikation in Form einer codierten Bildinformation auf einer Anzeigeeinheit (18) des Datenverarbeitungsgerätes (12),
― Erfassen der Anforderungs-Information (16) mit einem optischen Sensor (20) des mobilen Geräts (14),
― Erzeugen einer Antwort-Information (22) in Form eines Freischaltcodes durch Generieren in dem mobilen Gerät (14) oder durch Abrufen aus einem Server über eine Kommunikationsverbindung (26) durch das mobile Gerät (14) und
― Darstellen des Freischaltcodes (22) auf einer Anzeige des mobilen Gerätes, wobei
der Freischaltcode (22) in Form einer codierten Bildinformation auf der Grundlage der erfassten Anforderungs-Information (16) in dem mobilen Gerät (14) erzeugt oder von dem Server abgerufen wird, wobei die codierte Bildinformation mittels eines mit dem Datenverarbeitungsgerät (12) gekoppelten optischen Lesegerätes (32) von der Anzeige des mobilen Gerätes (14) gelesen und in das Datenverarbeitungsgerät (12) übertragen wird, wobei das Datenverarbeitungsgerät (12) zumindest während dieser Datenübertragung nicht mit einem weiteren Datennetz verbunden sein muss, und wobei das Datenverarbeitungsgerät (12) ausgebildet ist, die codierte Bildinformation zu erfassen und automatisch die Software-Applikation freizuschalten.

2. Verfahren nach Anspruch 1,
**dadurch gekennzeichnet,**
**dass** die Antwort-Information mittels einer Kamera wie CCD-Kamera oder eines Scanners wie Laser-Scanner in das Datenverarbeitungsgerät eingelesen wird.

3. Verfahren nach Anspruch 1,
**dadurch gekennzeichnet,**
**dass** die Antwort-Information mittels einer optischen Maus mit integriertem Bildsensor in das Datenverarbeitungsgerät eingelesen wird.

4. Verfahren nach zumindest einem der vorhergehenden Ansprüche,
**dadurch gekennzeichnet,**
**dass** die Antwort-Information in Form der codierten Bild-Information als ein QR-Code oder ein Strichcode erzeugt wird.

5. Verfahren nach zumindest einem der vorhergehenden Ansprüche,
**dadurch gekennzeichnet,**
**dass** die Antwort-Information von einem Lizenzierungs-Server abgerufen wird.

6. Anordnung (10) zur Durchführung des Verfahrens nach einem der Ansprüche 1 bis 5, umfassend ein Datenverarbeitungsgerät (12) mit einer Anzeigeeinheit (18) und einem optischen Lesegerät (32), wobei das Datenverarbeitungsgerät (12) ausgebildet ist, eine Anforderungs-Information (16) in Form einer codierten Bild-Information zur Freischaltung einer in dem Datenverarbeitungsgerät (12) installierten Software-Applikation auf der Anzeigeeinheit (18) darzustellen, ein mobiles Gerät (14) mit einem optischen Lesegerät (20), wobei das mobile Gerät (14) ausgebildet ist, die Anforderungs-Information (16) zu lesen und eine Antwort-Information (22) in Form eines Freischaltcodes zur Freischaltung der Software-Applikation zu erzeugen oder über eine Kommunikationsverbindung (26) von einem Server abzurufen und auf einer Anzeigeeinheit anzuzeigen,
wobei
der Freischaltcode (22) in Form einer codierten Bildinformation auf der Anzeigeeinheit (24) des mobilen Gerätes (14) dargestellt ist und wobei das Datenverarbeitungsgerät (12) ausgebildet ist, die auf der Anzeigeeinheit (24) des mobilen Gerätes (14) dargestellte codierte Bildinformation mittels des optischen Lesegerätes (32) optisch zu fassen, wobei das Datenverarbeitungsgerät (12) zumindest während dieser Erfassung nicht mit einem weiteren Datennetz verbunden sein muss, und die codierte Bildinformation zu verwenden, um automatisch die Software-Applikation freizuschalten.

7. Anordnung nach Anspruch 6,
**dadurch gekennzeichnet,**
**dass** das optische Lesegerät (32) eine Kamera wie CCD-Kamera, ein Scanner oder eine optische Maus mit integriertem Bildsensor ist.

8. Anordnung nach Anspruch 6,
**dadurch gekennzeichnet,**
**dass** die codierte Bildinformation ein QR-Code oder ein Strichcode ist.

9. Anordnung nach Anspruch 6,
**dadurch gekennzeichnet,**
**dass** das optische Lesegerät (32) über eine Funkverbindung oder Kabelverbindung (34) mit dem Datenverarbeitungsgerät (12) gekoppelt ist oder integraler Bestandteil des Datenverarbeitungsgerät ist und/oder dass das mobile Gerät (14) mit einem Netzwerk wie Internet gekoppelt ist.

## Claims

1. A method for interaction between a data processing device (12) such as a personal computer and a mobile device (14) such as a smartphone for the activation of a software action in form of an activation of a software application installed in the data processing device (12), comprising the method steps:
― representation of request information (16) in form of a coded image information for activation the software application on a display unit (18) of the data processing device (12),
― acquisition of the request information (16) with an optical sensor (20) of the mobile device (14),
― generation of reply information (22) in form of an activation-code in the mobile device (14) or by retriving from a server via a communication connection (26) by the mobile device (14), and
― representation of the activation-code (22) on a display of the mobile device,
wherein
the activation-code (22) in the form of a coded image information is generated on the basis of the detected request information or is requested from the server, wherein the coded image information is read by means of an optical reading device (32) coupled to the data processing device (12) from the display of the mobile device (14) and is transmitted to the data processing device (12), wherein the data processing device (12) is not connected to the data network at least during the data transmission and wherein the data processing device (12) is configured, to detect the coded image information and automatically activate the software-application.

2. The method according to claim 1,
**characterized in that**
the reply information is read into the data processing device by means of a camera such as a CCD camera or by means of a scanner such as a laser scanner.

3. The method according to claim 1,
**characterized in that**
the reply information is read into the data processing device by means of an optical mouse with integrated image sensor.

4. The method according to claim 1,
**characterized in that**,
the reply information in form of the coded image information is generated as a QR code or a barcode.

5. The method according to claim 1,
**characterized in that**
the reply information is retrieved in a licensing server.

6. An arrangement (10) for carrying out the method according to any one of claims 1 to 5, comprising a data processing device (12) with a display unit (18), an optical reading device (32), wherein the data processing device (12) is designed in order to represent request information (16) in form of a coded image information for activation a software application installed in the data processing unit on the display unit (18), a mobile device (14) with an optical reading device (32), wherein the mobile device (14) is designed to read the request information (16) and generating a reply information in form of an activation-code for activation the software application or requesting the reply information via a communication connection (26) from a server and display reply information (22) on a display unit,
wherein the activation-code (12) in form of the coded image information is displayed on the display unit (24) of the mobile device (14) and wherein the data processing device (12) is designed in order to optically acquire the coded image information (22) represented on the display unit (24) of the mobile device (14) optically by means of the optical reading device (32), wherein the data processing device (12) does not have to be connected to the data network at least during the data transmission, and to use the coded image information, to automatically activate the software action.

7. The arrangement according to claim 6,
**characterized in that**
the optical reading device (32) is a camera such as a CCD camera, a scanner or an optical mouse with integrated image sensor.

8. The arrangement according to claim 6,
**characterized in that**
the coded image information is a QR code or a barcode.

9. The arrangement according to claim 6,
**characterized in that**
the optical reading device (32) is coupled via a wireless connection or cable connection (34) to the data processing device (12) or it is an integral component of the data processing device, and/or that the mobile device (14) is coupled to a network such as the Internet.

## Revendications

1. Procédé d'interaction entre un appareil de traitement de données (12), tel qu'un ordinateur personnel, et un appareil mobile (14), tel qu'un smartphone, pour activer une action de logiciel sous forme d'activation d'une application logicielle installée dans l'appareil de traitement de données (12), comprenant les étapes suivantes :
- Affichage d'une information de requête (16) pour l'activation de l'application logicielle sous forme d'information graphique codée sur une unité d'affichage (18) de l'appareil de traitement de données (12),
- Acquisition de l'information de requête (16) par un capteur optique (20) de l'appareil mobile (14),
- Création d'une information de réponse (22) sous forme de code d'activation par génération dans l'appareil mobile (14) ou demande à un serveur par l'appareil mobile (14) via une liaison de communication (26) et
- Affichage du code d'activation (22) sur un affichage de l'appareil mobile,
sachant que le code d'activation (22) est créé dans l'appareil mobile (14) sous forme d'information graphique codée sur la base de l'information de requête acquise (16) ou est demandé à un serveur, sachant que l'information graphique codée est lue sur l'affichage de l'appareil mobile (14), au moyen d'un appareil de lecture (32) optique couplé à l'appareil de traitement de données (12), et transmis à l'appareil de traitement de données (12), sachant que l'appareil de traitement de données (12) ne nécessite pas une connexion à un autre réseau de données du moins pendant cette transmission de données et sachant que l'appareil de traitement de données (12) est conçu pour acquérir l'information graphique codée et activer automatiquement l'application logicielle.

2. Procédé selon la revendication 1,
**caractérisé en ce**
**que** l'information de réponse est capturée par l'appareil de traitement de données au moyen d'une caméra, telle qu'une caméra CCD ou un scanneur, tel qu'un scanneur laser.

3. Procédé selon la revendication 1,
**caractérisé en ce**
**que** l'information de réponse est capturée par l'appareil de traitement de données au moyen d'une souris optique avec capteur d'image intégré.

4. Procédé selon au moins une des revendications précédentes,
**caractérisé en ce**
**que** l'information de réponse sous forme d'information graphique codée est générée comme code QR ou code-barres.

5. Procédé selon au moins une des revendications précédentes,
**caractérisé en ce**
**que** l'information de réponse est demandée à un serveur de licences.

6. Système (10) d'exécution dudit procédé selon une des revendications 1 à 5, comprenant un appareil de traitement de données (12) avec une unité d'affichage (18) et un appareil de lecture (32) optique, sachant que l'appareil de traitement de données (12) est conçu pour représenter sur l'unité d'affichage (18) une information de requête (16) sous forme d'information graphique codée pour l'activation d'une application logicielle installée dans l'appareil de traitement de données (12), un appareil mobile (14) avec un appareil de lecture (20) optique, sachant que l'appareil mobile (14) est conçu pour lire l'information de requête (16) et générer une information de réponse sous forme de code d'activation pour l'activation de l'application logicielle ou pour demander l'information à un serveur via une liaison de communication (22) et l'afficher sur une unité d'affichage, sachant que le code d'activation (22) est affiché sur l'unité d'affichage (24) de l'appareil mobile (14) sous forme d'information graphique codée et sachant que l'appareil de traitement de données (12) est conçu pour acquérir optiquement l'information graphique codée représentée sur l'unité d'affichage (24) de l'appareil mobile (14) au moyen de l'appareil de lecture (32) optique, sachant que l'appareil de traitement de données (12) ne nécessite pas une connexion à un autre réseau de données du moins pendant cette acquisition, et pour utiliser l'information graphique codée afin d'activer automatiquement l'application logicielle.

7. Système selon la revendication 6,
**caractérisé en ce**
**que** l'appareil de lecture (32) optique est une caméra telle qu'une caméra CCD, un scanneur ou une souris optique avec capteur d'image intégré.

8. Système selon la revendication 6,
**caractérisé en ce**
**que** l'information graphique codée est un code QR ou un code-barres.

9. Système selon la revendication 6,
**caractérisé en ce**
**que** l'appareil de lecture (32) optique est couplé à l'appareil de traitement de données (12) via une liaison radio ou une connexion par câble (34) ou fait partie intégrante de l'appareil de traitement de données et/ou que l'appareil mobile (14) est couplé à un réseau comme internet.
